# EUROPÄISCHE PATENTSCHRIFT

(11) **EP 1 006 144 B1**
(45) Veröffentlichungstag und Bekanntmachung des Hinweises auf die Patenterteilung: **29.08.2007**
(21) Anmeldenummer: 99120802.6
(22) Anmeldetag: 21.10.1999
(51) Int. Cl.: C08K 5/00, C08K 3/22, C08L 83/04

(54) **Siliconkautschukzusammensetzung zur Herstellung von Kabeln bzw. Profilen mit Funktionserhalt im Brandfall**
Flame retardant silicone rubber composition for manufacturing of cables and profiles
Composition de caoutchouc de silicone ignifugé pour la préparation des cables et profiles

(30) Priorität: 03.12.1998 DE 19855912
(43) Veröffentlichungstag der Anmeldung: 07.06.2000
(73) Patentinhaber: Wacker Chemie AG, 81737 München (DE)
(72) Erfinder: Wolfer, Dietrich, Dr., 5110 Oberndorf (AT); Marsch, Wilhelm, 84533 Haiming (DE); Gerhardinger, Peter, 84489 Burghausen (DE)
(74) Vertreter: Fritz, Helmut

(56) Entgegenhaltungen:
- EP-A- 0 329 332
- EP-A- 0 801 111
- DE-A- 2 257 915
- US-A- 5 543 450
- XP002133782 XP002133782

## Beschreibung

Die Erfindung betrifft Zusammensetzungen von Siliconkautschukmassen, die im Brandfall den Funktionserhalt von damit isolierten Kabeln erhalten sowie ein Verfahren zu ihrer Herstellung.

Aus DE-OS-30 08 084 sind bereits keramifizierende Siliconzusammensetzungen bekannt, die Siliconkautschukmassen Metalloxid und Platinverbindungen enthalten. Jedoch handelt es sich beim Siliconkautschuk um teure additionsvernetzende Massen, die zudem schlechtere Isolationseigenschaften bei Temperaturen über 900 °C aufweisen.

Aus EP 0 708 455 sind peroxidisch vernetzende Siliconkautschukmassen hoher Dichte bekannt, die keramifizierbare Füllstoffe wie ein Metalloxid, wie Aluminiumoxid und ein Benetzungsmittel für diese enthalten und als Kabelisoliermaterial verwendet werden. Derartige Massen bilden beim Verbrennen in der offenen Flamme wohl eine stabile Ascheschicht, aber keine harte Keramik. Bei Schlagbeanspruchung fällt diese Schicht vom Leiter ab.

Aufgabe der Erfindung ist es, Siliconkautschuk als Kabelisoliermaterial zur Verfügung zu stellen, der die Nachteile des Standes der Technik überwindet und insbesondere ein Material als Kabelisolierung zur Verfügung zu stellen, das den Funktionserhalt im Brandfall bei geringer Dichte ermöglicht.

Diese Aufgabe wird durch die Erfindung gelöst.

Gegenstand der Erfindung ist eine keramifizierbare, im Brandfall funktionserhaltende Zusammensetzung, enthaltend peroxidisch vernetzenden, additionsvernetzenden oder kondensationsvernetzenden Siliconkautschuk, zumindest einer Verbindung aus der Gruppe, in einer Menge von 10 -20 Gew.% die aus Metalloxiden aus der Gruppe Aluminiumoxid, Magnesiumoxid, Zinnoxid, Calciumoxid, Bariumoxid und Metallverbindungen dieser Gruppe bei denen bei Erhitzung Oxide entstehen, Borsäure, Zinkborat besteht sowie Platinkomplexe mit zumindest einer ungesättigten Gruppe.

Der erfindungsgemäße Siliconkautschuk ist vorzugsweise eine peroxidisch vernetzende Organopolysiloxanmasse die vorzugsweise folgende Komponenten enthält.

Organopolysiloxane aus Einheiten der allgemeinen Formel 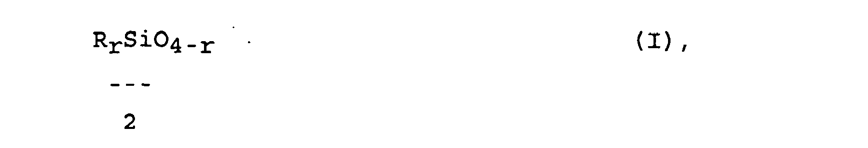 worin
R gleich oder verschieden sein kann und gegebenenfalls substituierter Kohlenwasserstoffrest bedeutet.
r 0, 1, 2 oder 3 ist und einen durchschnittlichen Zahlenwert von 1,9 bis 2,1 hat,

Beispiele für Kohlenwasserstoffreste R sind Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Biphenyl-, Naphtyl- und Anthryl-und Phenanthrylrest; Alkarylreste, wie o-, m-, p-Tolylreste, Xylylreste und Ethylphenylreste; Aralkylreste, wie der Benzylrest, der □ - und der β-Phenylethylrest.

Beispiele für substituierte Kohlenwasserstoffreste R sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Bevorzugt handelt es sich bei Rest R um Wasserstoffatom und Kohlenwasserstoffreste mit 1 bis 8 Kohlenstoffatomen, besonders bevorzugt um den Methylrest.

Weitere Beispiele für Reste R sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest R um Alkenylreste mit 2 bis 8 Kohlenstoffatomen, besonders bevorzugt um den Vinylrest.

Bei gegebenenfalls substituierten Kohlenwasserstoffresten mit 1 bis 8 Kohlenstoffatomen sind der Methyl-, Vinyl-, Phenyl- und 3,3,3-Trifluorpropylrest besonders bevorzugt.

Vorzugsweise sind an mindestens 70 Mol% der in dem Organopolysiloxan (A) aus Einheiten der Formel (I) enthaltenen Si-Atome Alkylreste, insbesondere Methylreste, gebunden. Enthalten die Organopolysiloxane neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Vorzugsweise bestehen die Organopolysiloxane (A) überwiegend aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität zwischen 10³ und 10⁸ mm²/s auf.

Vorzugsweise werden als Vernetzter bei den erfindungsgemäßen Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis - 4 - +Methylbenzoylperoxid - (= PMBP) und 2,5-DimethylHexan - 2,5 - di-tertiär-butylperoxid (=DHBP) im Verhältnis 1 : 0,4 bis 0,5 : 1, bevorzugt im Verhältnis 1:0,4 verwendet.

Des weiteren enthalten die erfindungsgemäßen Organopolysiloxane (A) vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 m²/g.

Die genannten Kieselsäurefüllstoffe können hydrophilen Charakter haben oder nach bekannten Verfahren hydrophobiert sein. Hierzu sei beispielsweise auf DE 38 39 900 A (Wacker-Chemie GmbH; angemeldet am 25.11.1988) bzw. die entsprechende US-A 5,057,151 verwiesen. Im allgemeinen erfolgt dann die Hydrophobierung mit 1 bis 20 Gew.-% Hexamethyldisilazan und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Des weiteren können als Füllstoffe faserige Komponenten, wie Glasfasern und Kunststoffasern, eingesetzt werden. Die BET-Oberfläche dieser Füllstoffe liegt vorzugsweise unter 50 m²/g.

Die erfindungsgemäßen, zu Elastomeren vernetzbaren Organopolysiloxanmassen enthalten Füllstoff (B) in Mengen von vorzugsweise 1 bis 200 Gewichtsteilen, besonders bevorzugt 30 bis 100 Gewichtsteilen, jeweils bezogen auf 100 Gewichtsteile Organopolysiloxan (A).

Der jeweiligen Anwendung entsprechend können den erfindungsgemäßen zu Elastomeren vulkanisierbaren Organopolysiloxanmassen Additive (C), wie beispielsweise Verarbeitungshilfsmittel, wie etwa Weichmacher, Pigmente und Stabilisatoren, wie etwa Hitzestabilisatoren, zugesetzt werden.

Beispiele für Weichmacher, die als Additive (C) eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Hitzestabilisatoren, die als Additive (C) eingesetzt werden können, sind Übergangsmetallfettsäuresalze, wie Eisenoctoat, Übergangsmetallsilanolate, wie Eisensilanolat, sowie Cer(IV)-Verbindungen.

Darüber hinaus enthalten die erfindungsgemäßen Massen vorzugsweise keine weiteren Stoffe.

Bei den jeweiligen zur Herstellung der erfindungsgemäßen Massen eingesetzten Komponenten kann es sich jeweils um eine einzelne Art einer solchen Komponente, wie auch um ein Gemisch aus mindestens zwei verschiedenen Arten einer solchen Komponente handeln.

Des weiteren können als Silikonkautschukmassen auch übliche kondensationsvernetzende Organopolysiloxane, wie in z.B EP 0 359 251 beschrieben, die hiermit durch Bezugnahme eingeschlossen ist (incorperated by reference), verwendet werden oder auch bekannte additionsvernetzende Massen.

Des weiteren sind in der erfindungsgemäßen Zusammensetzung Metalloxide aus der Gruppe Magnesiumoxid, Aluminiumoxid, Zinnoxid, Calciumoxid, Titanoxid, Bariumoxid und Metallverbindungen dieser Gruppen, bei denen bei Erhitzung Oxide entstehen, wie zum Beispiel Hydroxide sowie Borsäure, Zinkborat in Mengen von 1,5% bis 40 Gew.% immer bezogen auf das gesamte Gewicht der Zusammensetzung, vorzugsweise 10 bis 20 Gew.%. Es können auch ihre Mischungen verwendet werden.

Die erfindungsgemäßen Zusammensetzungen enthalten Platinkomplexe, die zumindest eine ungesättigte Gruppe aufweisen, wie vorzugsweise Platin-Olefin-Komplexe, Platin-Aldehyd-Komplexe, Platin-Keton-Komplexe, Platin-Vinylsiloxan-Komplexe, Platin-1,3-Divinyl-1,1,3,3-tetramethyldisiloxankomplexe mit oder ohne Gehalt an nachweisbarem organischem Halogen, Platin-Norbornadienmethylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, Umsetzungsprodukt aus in 1-Octen gelöstem Platintetrachlorid mit sec.-Butylamin, wobei der Platin - 1,3-Divinyl-1,1,3,3-tetrametyhldisiloxankomplex besonders bevorzugt ist. Dieser Platinkomplex wird in Mengen von 5 bis 200 ppm, bevorzugt 10 bis 100 ppm zugesetzt, wobei die Menge auf reines Platin bezogen ist. Es können auch Mischungen der Platinkomplexe verwendet werden.

Ein weiterer Gegenstand der Erfindung ist eine Verfahren zur Herstellung der erfindungsgemäßen Zusammensetzung, wobei alle oben genannten Komponenten vermischt werden.

Weitere Gegenstände der vorliegenden Erfindung sind Kabel und Profile, die die erfindungsgemäße Zusammensetzung enthalten. Bei den Kabeln handelt es sich vorzugsweise um Komunikations- bzw. Energiekabel. Bei den Profilen handelt es sich um Silikonschäume oder Massiv-Dichtungen zur Brandabschottung von Räumen, Schränken und Tresoren sowie Ablatsionsmassen zur Auskleidung von Raketenmotoren etc.

Überraschenderweise ermöglicht die vorliegende Erfindung, daß bereits bei einer Temperatur von 650°C ein Sintervorgang einsetzt, der zur Bildung einer Keramikschicht aus den Verbrennungsprodukten von Silikonkautschuk führt. Dadurch können Silikonkautschukmischungen für Anwendungen, in denen Funktionserhalt im Brandfall gefordert wird, mit einer geringen Dichte (max. 1,27) und daher im Vergleich zu normalen Silikonkautschuk unverändertem Eigenschaftsniveau hinsichtlich mechanischen, elektrischen und Hitzealterungs-Eigenschaften hergestellt werden. Gegenüber den üblichen Silikonkautschukmassen wird durch die geringe Dichte der erfindungsgemäßen Zusammensetzungen ein besseres mechanisches Eigenschaftsniveau, bessere Hitzealterungs-Eigenschaften und eine höhere Isolationsfähigkeit vor allem im Temperaturbereich über 900°C erreicht. Die im Brandfall gebildete Keramik ist außerdem wesentlich schlag- und erschütterungsunempfindlicher als die im Stand der Technik beschriebenen Mischungen, die nur eine stabile Ascheschicht bilden.

### Beispiel 1

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von 8 · 10⁶ mPa·s bei 25°C werden in einem bei 150°C betriebenen Kneter zunächst mit 50 Teilen pyrogen in der Gaspase erzeugtem Siliciumdioxyd mit einer Oberfläche von 200 m²/g, dann mit 1 Teil durch Trimethylsioxygruppen endblockierten Dimethylpolysiloxan mit einer Viskosität von 96 mPa·s bei 25°C, dann mit 7 Teilen eines in den endständigen Einheiten je eine Si-gebundene Hydroxylgruppe aufweisenden Dimethylpolysiloxans mit einer Viskosität von 40 mPa·s bei 25°C werden in einem Kneter mit 36 Teilen Aluminiumoxid mit einer Korngröße > 10 µ mit einem Gehalt an Alkalioxiden < 0,5 Gew. % sowie 0,3 Gew.% eines Platin- 1,3-Divinyl-1,1,3,3-tetrametyhldisiloxankomplexes in einem Kneter vermischt.

### Vergleichsbeispiel 2

Die in Beispiel 1 beschriebene Arbeitsweise wird wiederholt mit der Abänderung, daß kein Platinkomplex zugesetzt wird.

### Vergleichsbeispiel 3

Die in Beispiel 2 beschriebene Arbeitsweise wird wiederholt mit der Abänderung, daß auch kein Aluminiumoxid zugesetzt wird.

### Vergleichsbeispiel 4

Die in Beispiel 1 beschriebene Arbeitsweise wird wiederholt mit der Abänderung, daß statt Aluminiumoxid Titanoxid zugesetzt wird.

Mit der Masse gemäß Beispiel 1 und dem Vergleichsbeispielen 2, 3 und 4 wird ein elektrischer Leiter (Draht 1,5 mm²) durch Extrusion isoliert. Die Wandstärke beträgt 1 mm. Ein Meter langes Stücke der dabei erhaltenen 4 Versuchsmuster werden jeweils als verseilte Doppelleitung mit einer Schlaglänge von ca. 5 cm in einem 80 cm langen, rohrförmigen, elektrisch beheizten Ofen bis 930 °C aufgeheizt. An einem Ende der verdrillten Zwillingsleitung wird während des gesamten Versuches eine Spannung von 500 Volt AC angelegt. Das andere Ende ist offen. Die Versuchsdauer beträgt 2 Std.

### Muster nach Beispiel 1:

Nach Entzündung der Leitungsisolation bei ca. 420 °C verbrennt diese und bildet dabei eine feste Keramikschicht. Während der 2 Stunden bei 930 °C wird die Spannungsbelastung von 500 Volt gehalten, ohne daß es zu einem Kurzschluß kommt. Obwohl durch die thermische Ausdehnung des metallischen Leiters in der Keramikschicht vereinzelt kleine Risse entstehen.

### Muster nach Vergleichsbeispiel 2:

Nach Entzündung der Leitung bei 420 °C verbrennt diese und bildet dabei eine zusammenhaftende Ascheschicht, die aber in der Folge noch vor Erreichen von 930 °C abfällt, wodurch in Folge der thermischen Dilatation der Drähte es zu einer Berührung und dadurch zu einem Kurzschluß kommt.

### Muster nach Vergleichsbeispiel 3:

Nach Entzündung der Leitung bei 420 °C verbrennt diese und bildet dabei eine pulverförmige Ascheschicht, die noch während des Brandes abfällt, kurz danach kommt es zu einem Kurzschluß.

### Muster nach Vergleichsbeispiel 4:

Nach Entzündung der Leitung bei 420 °C verbrennt diese und bildet dabei eine pulverförmige festhaftende Ascheschicht, die noch während des Brandes abfällt, kurz danach kommt es zu einem Kurzschluß.

## Patentansprüche

1. Keramifizierbare, im Brandfall funktionserhaltende Zusammensetzung, enthaltend peroxidisch vernetzenden, additionsvernetzenden oder kondensationsvernetzenden Siliconkautschuk, zumindest einer Verbindung aus der Gruppe, in einer Menge von 10 -20 Gew.% die aus Metalloxiden aus der Gruppe Aluminiumoxid, Magnesiumoxid, Zinnoxid, Calciumoxid, Bariumoxid und Metallverbindungen dieser Gruppe bei denen bei Erhitzung Oxide entstehen, Borsäure, Zinkborat besteht sowie Platinkomplexe mit zumindest einer ungesättigten Gruppe.

2. Zusammensetzung nach dem Anspruch 1, **dadurch gekennzeichnet, daß** der Platinkomplex ein Platinvinylsiloxankomplex ist.

3. Zusammensetzung nach Anspruch 2, **dadurch gekennzeichnet, daß** der Platinvinysiloxankomplex der Platin - 1,3-Divinyl-1,1,3,3-tetrametyhldisiloxankomplexe ist.

4. Verfahren zur Herstellung einer Zusammensetzung nach einem der Ansprüche 1 bis 3, **dadurch gekennzeichnet, daß** die Komponenten vermischt werden.

5. Kabel, **dadurch gekennzeichnet, daß** die Isolation der Leiter eine Zusammensetzung nach einem der Ansprüche 1 bis 4 enthält.

6. Profil, **dadurch gekennzeichnet, daß** es eine Zusammensetzung nach einem der Ansprüche 1 bis 4 enthält.

7. Verwendung einer Zusammensetzung nach den Ansprüchen 1-4, eines Kabels nach Anspruch 5, eines Profils nach Anspruch 6 zum Funktionserhalt im Brandfall.

## Claims

1. Ceramifiable composition which retains its function in the event of a fire, comprising peroxidically crosslinking, addition-crosslinking or condensation-crosslinking silicone rubber, an amount of from 10 to 20% by weight of at least one compound from the group which consists of metal oxides from the group of aluminium oxide, magnesium oxide, tin oxide, calcium oxide, barium oxide and metal compounds of this group in which oxides are produced on heating, boric acid, or zinc borate, and also platinum complexes having at least one unsaturated group.

2. Composition according to Claim 1, **characterized in that** the platinum complex is a platinum-vinylsiloxane complex.

3. Composition according to Claim 2, **characterized in that** the platinum-vinylsiloxane complex is the platinum-1,3-divinyl-1,1,3,3-tetramethyldisiloxane complex.

4. Process for preparing a composition according to any one of Claims 1 to 3, **characterized in that** the components are mixed.

5. Cable **characterized in that** the insulation of the conductors comprises a composition according to any one of Claims 1 to 4.

6. Profile **characterized in that** it comprises a composition according to any one of Claims 1 to 4.

7. Use of a composition according to Claims 1-4, of a cable according to Claim 5, or of a profile according to Claim 6, for retention of function in the event of a fire.

## Revendications

1. Composition pouvant être transformée en céramique, conservant sa fonction en cas d'incendie, contenant du caoutchouc de silicone réticulant par un peroxyde, par addition ou par condensation, au moins un composé du groupe, en une quantité de 10-20% en poids, qui est formé par les oxydes métalliques du groupe oxyde d'aluminium, oxyde de magnésium, oxyde d'étain, oxyde de calcium, oxyde de baryum et les composés métalliques de ce groupe qui forment des oxydes sous l'effet de la chaleur, l'acide borique, le borate de zinc, ainsi que des complexes du platine comprenant au moins un groupement insaturé.

2. Composition selon la revendication 1, **caractérisée en ce que** le complexe du platine est un complexe de type platine-vinylsiloxane.

3. Composition selon la revendication 2, **caractérisée en ce que** le complexe de type platine-vinylsiloxane est le complexe platine-1,3-divinyl-1,1,3,3-tétraméthyldisiloxane.

4. Procédé pour la préparation d'une composition selon l'une quelconque des revendications 1 à 3, **caractérisé en ce que** les composants sont mélangés.

5. Câble, **caractérisé en ce que** l'isolation des conducteurs contient une composition selon l'une quelconque des revendications 1 à 4.

6. Profilé, **caractérisé en ce qu'**il contient une composition selon l'une quelconque des revendications 1 à 4.

7. Utilisation d'une composition selon les revendications 1-4, d'un câble selon la revendication 5, d'un profilé selon la revendication 6 en vue de la conservation de la fonction en cas d'incendie.
